# EUROPEAN PATENT SPECIFICATION

(11) **EP 2 241 080 B1**
(45) Date of publication and mention of the grant of the patent: **17.06.2015**
(21) Application number: 09700384.2
(22) Date of filing: 08.01.2009
(51) Int. Cl.: H04L 29/06, H04W 36/00

(54) **IP MULTIMEDIA SUBSYSTEM REGISTRATION**
IP-MULTIMEDIASUBSYSTEM-REGISTRIERUNG
ENREGISTREMENT DE SOUS-SYSTÈME MULTIMÉDIA IP

(30) Priority: 10.01.2008 US 20200
(43) Date of publication of application: 20.10.2010
(73) Proprietor: Optis Wireless Technology, LLC, Plano, TX 75025 (US)
(72) Inventor: LINDHOLM, Fredrik, SE-112 15 Stockholm (SE); KELLER, Ralf, 52146 Würselen (DE)
(74) Representative: Grünecker Patent- und Rechtsanwälte PartG mbB
(86) International application number: PCT/EP2009/050157
(87) International publication number: WO 2009/087186

(56) References cited:
- EP-A- 1 827 034

## Description

### TECHNICAL FIELD

The invention relates to the field of communications networks, and in particular to the field of IP Multimedia Subsystem Centralized Services networks.

### BACKGROUND

The IP Multimedia Subsystem (IMS) is the technology defined by the Third Generation Partnership Project (3GPP) to provide IP Multimedia services over mobile communication networks. IP Multimedia services provide a dynamic combination of voice, video, messaging, data, etc. within the same session. As the number of basic applications, and the media which it is possible to combine, increases, so will the number of services offered to the end users, giving rise to a new generation of personalised, rich multimedia communication services. The IMS is defined in the 3GPP Specification 23.228.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly.

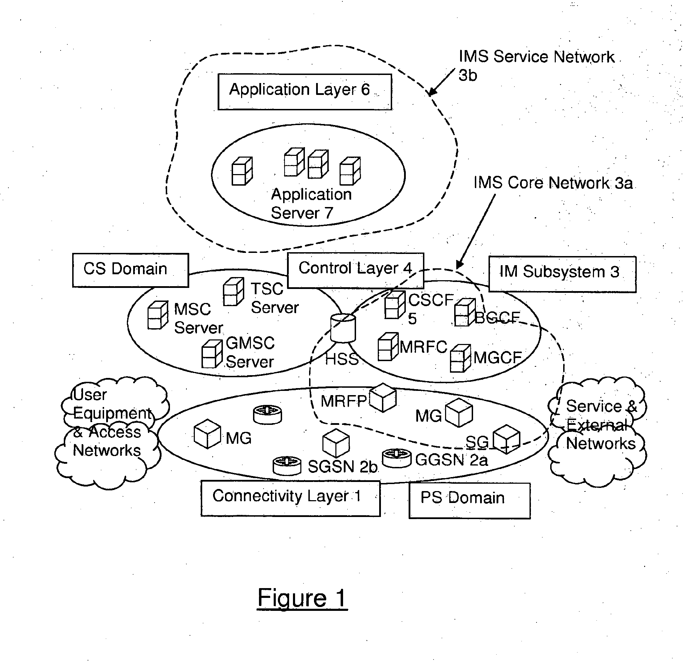

Figure 1 illustrates schematically how the IMS 3 fits into the mobile network architecture in the case of a GPRS/PS access network. As shown in Figure 1, control of communications occurs at three layers (or planes). The lowest layer is the Connectivity Layer 1, also referred to as the bearer, or traffic, plane and through which signals are directed to/from user terminals accessing the network. The GPRS network includes various GPRS Support Nodes (GSNs) 2a, 2b. A gateway GPRS support node (GGSN) 2a acts as an interface between the GPRS backbone network and other networks (radio network and the IMS network). A Serving GPRS Support Node (SGSN) 2b keeps track of the location of an individual Mobile Terminal and performs security functions and access control. Access to the IMS 3 by IMS subscribers is performed through an IP-Connectivity Access Network (IP-CAN). In Figure 1 the IP-CAN is a GPRS network including entities linking the user equipment to the IMS 3 via the connectivity layer 1.

The IMS 3 includes a core network 3a, which operates over the Control Layer 4 and the Connectivity Layer 1, and a Service Network 3b. The IMS core network 3a includes nodes that send/receive signals to/from the GPRS network via the GGSN 2a at the Connectivity Layer 1 and network nodes that include Call/Session Control Functions (CSCFs) 5. The CSCFs 5 include Serving CSCFs (S-CSCF) and Proxy CSCFs (P-CSCF), which operate as SIP proxies within the IMS in the middle, Control Layer.

At the top is the Application Layer 6, which includes the IMS service network 3b. Application Servers (ASs) 7 are provided for implementing IMS service functionality. Application Servers 7 provide services to end-users on a session-by-session basis, and may be connected as an end-point to a single user, or "linked in" to a session between two or more users. Certain Application Servers 7 will perform actions dependent upon subscriber identities (either the called or calling subscriber, whichever is "owned" by the network controlling the Application Server 7).

IMS relies on Internet Protocol (IP) as a transport technology. Using IP for voice communications, however, presents some challenges, especially in the mobile community where Voice Over IP (VoIP) enabled packet switched (PS) bearers may not always be available. To allow operators to start offering IMS-based services while voice enabled PS-bearers are being built out, the industry has developed solutions that use existing Circuit Switched (CS) networks to access IMS services. These solutions are referred to as IMS Centralized Services (ICS). ICS is also the name of the Work Item in 3GPP Release 8 addressing these matters.

Currently, ICS contains three alternative solutions known as I1-CS, I1-PS and "IMSC". IMSC is a solution in which the network implements an adaptation function between a Global System for Mobile Communications (GSM) terminal and the IMS system. The terminal is not required to have any special functionality, but the CS network requires an update with new functionality in Mobile Switching Centres (MSC)/Visitor Location Registers (VLRs). The enhanced MSC server acts as the bridge between the CS network and the IMS network, providing the terminal with a point of presence in IMS. 11-CS and 11-PS both require ICS functionality in an accessing terminal. The CS network is on the other hand unaffected and transparent to the communication taking place between the ICS capable terminal and an IMS network. IMS CS Control Protocol (ICCP) is a control protocol standardized in 3GPP to allow an ICS capable terminal to communicate with service implementations in an IMS network when a CS network is used as a transport network. It is used for mid-call signalling for services such as call hold and call waiting. Unstructured Supplementary Services Data (USSD) carries the ICCP protocol transparently from an ICS terminal through the CS network to an "IMS-Adapter" that translates ICCP into SIP. The IMS-Adapter is a new functional entity in the IMS network, termed an IMS CS Control Function (ICCF).

A difference between 11-CS and 11-PS is that 11-PS uses SIP signalling over a PS access network for all ICS related signalling. This includes mid-call manipulations (for example hold/retrieve, Explicit Call Transfer), the addition of non-speech media to an existing call, IMS Registration, and so on. 11-CS, on the other hand, uses the CS (ICCP over USSD) access network for some purposes such as mid-call manipulations but not for other actions such as IMS Registration, the addition of media to calls, and multiparty calls.

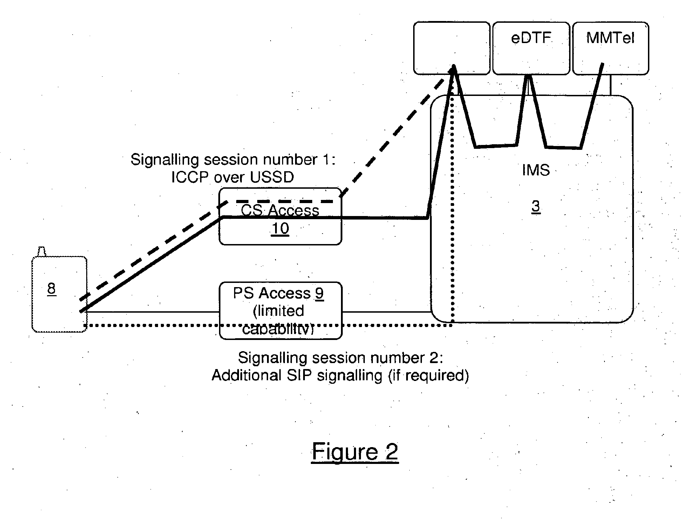

Figure 2 herein illustrates signalling principles for the I1-CS solution. A terminal 8 is shown that connects to an IMS network 3 via a PS access network 9 and a CS access network 10. Signalling from both access networks traverses an ICCF 11 in the IMS network 3. For both 11-CS and I1-PS, the PS access network 9 is either not suitable for, or not allowed to carry speech (shown as limited capability in Figure 2), but suitable for SIP signalling. If the signalling takes place simultaneously with a CS voice call, Dual Transfer Mode (DTM) capabilities (the ability to have PS and CS bearers simultaneously in 2G (GSM/EDGE)) are required.

The two different signalling sessions shown in Figure 2 relate to the same call and should be presented to a remote end (another terminal) as a single session. To be able to receive registered services, the network needs to be aware that the terminal is present. In IMS, the terminal will always register in order for the IMS network 3 to be able to know that the terminal is reachable. For I1-PS, the IMS registration takes place over the PS access network 9.

Similar for the IMSC scenario, the IMS network needs to be aware of the availability of the user to grant the user registered services. The current IMSC solution allows this by ensuring that the ICS enhanced visited MSC server acts as a terminal and registers in IMS on behalf of the CS terminal.

The main problems with current approaches are that for the I1-CS usage, the terminal cannot do an IMS registration. It has been proposed that the ICCF will always make an IMS registration on behalf of the terminal for the CS access. The problem with this is that it is not possible to have two registrations using the same private user identity at the same point in time. The PS registration is always needed when PS access is available. Hence, it is not possible to skip such registration. If a registration is not done for CS access, the problem that occurs is that, if I1-PS is used, and a fall back to I1-CS is needed, e.g., due to loss of PS coverage, the IMS network will treat the user as unregistered and only provide unregistered services for the user. If a full user experience is needed, then the IMS network needs to be configured to have the same services both for registered services and unregistered services. This will be a limitation to the system.

A similar problem occurs in the case of IMSC. If a user roams into a network or area where an ICS enhanced visited MSC server is not present, the user will not be registered in IMS by such an enhanced MSC. The home IMS network will not be able to detect that the user is registered in CS and can therefore not provide registered services to the user.

EP 1827034 describes a method and a system for maintaining session continuity.

### SUMMARY

According to a first aspect of the invention, there is provided a method of ensuring that a currently reachable contact address is registered for a user terminal within an IP Multimedia Subsystem, the method comprising:
registering a first contact address for said terminal with the IP Multimedia Subsystem; and characterised by
subsequently determining on a network side that said terminal is no longer reachable via said first contact address; and
as a consequence of such a determination, registering on the network side a second reachable contact address on behalf of the user terminal, with the IP Multimedia Subsystem.

The method may comprise determining whether or not said user terminal is associated with a user subscription allowing access to IP Multimedia Subsystem Centralized Services and performing said step of registering a second reachable contact address only if access is allowed.

Said first contact address may be an address associated with a packet switched access and said second contact address may be an address associated with a circuit switched access. Said step of subsequently determining that said terminal is no longer reachable via said first contact address may comprise determining that said packet access has been lost. The method may comprise, following registration of said second contact address, determining on a network side that said terminal is again reachable via said first contact address and, as a consequence, deregistering said second contact address. Registration of the first contact address may be initiated by the user terminal over the packet switched access.

Said steps of subsequently determining that said terminal is no longer reachable via said first contact address and registering a second reachable contact address may be performed within a circuit switched core network.

The method may comprise deregistering said first contact address with the IP Multimedia Subsystem in the event that it is determined that said terminal is no longer reachable via said first contact address.

The method may comprise, as a consequence of a determination on a network side that said terminal is no longer reachable via said first contact address, deregistering the first contact address with the IP Multimedia Subsystem.

Said first contact address may be associated with a Mobile Switching Centre of a circuit switched core network, the Mobile Switching Center providing a point of presence for the user terminal within the IP Multimedia Subsystem, and said second contact address may be associated with an alternative Session Initiation Protocol message destination.

Said step of registering a first contact address may be performed by said Mobile Switching Center. Said alternative destination may be one of a Gateway Mobile Switching Centre, a Media Gateway Control Function, and a Session Initiation Protocol Application Server.

The method may comprise querying the IP Multimedia Subsystem to determine whether or not said first contact address is registered on behalf of the user terminal and, if not, performing said step of registering said second reachable contact address.

The method may comprise, following registration of said second contact address, querying the IP Multimedia Subsystem again to determine whether or not said first contact address has been reregistered and, if so, deregistering said second contact address.

The method may comprise, following registration of said second contact address, sending a notification from a Serving Control State Function to a registration function to inform the registration function when said first contact address has been reregistered, the registration function responding by deregistering said second contact address.

According to a second aspect of the invention, there is provided a method of ensuring that a currently reachable contact address is registered for a user terminal within an IP Multimedia Subsystem, where the user terminal may have available to it one or both of a packet switched and a circuit switched access, the method comprising:
when the user terminal has available to it both a packet switched and a circuit switched access, registering a first contact address associated with the packet switched access for said terminal with the IP Multimedia Subsystem; and characterised by
subsequently determining on a network side that said terminal is no longer reachable via said packet switched access; and
as a consequence of such a determination, registering on the network side a second contact address associated with said circuit switched access on behalf of the user terminal, with the IP Multimedia Subsystem.

The step of registering a second contact address with the IP Multimedia Subsystem may be performed by a network based registration function.

According to a third aspect of the invention, there is provided a method of ensuring that a currently reachable contact address is registered for a user terminal within an IP Multimedia Subsystem, the method comprising:
where the user terminal is being served by an enhanced Mobile Switching Centre, registering a first contact address for said terminal with the IP Multimedia Subsystem, the first contact address being associated with said enhanced Mobile Switching Centre; and characterised by
subsequently determining on a network side that said terminal is no longer reachable via said first contact address; and
as a consequence of such a determination, registering on the network side a second reachable contact address on behalf of the user terminal, with the IP Multimedia Subsystem, the second contact address being associated with an alternative Session Initiation Protocol message destination.

According to a fourth aspect of the invention, there is provided an apparatus configured to perform a network based registration function on behalf of user terminals, registering contact address for user terminals with an IP Multimedia Subsystem, and for use in implementing the method of any one of the first to third aspects of the invention.

According to a fifth aspect of the invention, there is provided a communications network node for ensuring that a currently reachable contact address is registered for a user terminal within an IP Multimedia subsystem, characterised by: means for determining that said terminal is no longer reachable via a first contact address; and means responsive to such a determination for registering a second reachable contact address on behalf of the user terminal with the IP Multimedia Subsystem.

The node may comprise one of a Gateway Mobile Switching Centre, an Application Server, and a Media Gateway Control Function.

### BRIEF DESCRIPTION OF THE DRAWINGS

Figure 1 is a schematic diagram illustrating a mobile network architecture;
Figure 2 is a diagram illustrating the signalling principles for a known I1-CS solution;
Figure 3 is a flow diagram illustrating a network-based registration function constituting a first embodiment of the invention;
Figure 4 is a flow diagram illustrating a network-based registration function constituting a second embodiment of the invention; and
Figure 5 is a block schematic diagram of a network node constituting an embodiment of the invention.

### DETAILED DESCRIPTION

The following description sets forth specific details, such as particular embodiments, procedures, techniques, etc. for purposes of explanation and not limitation. In some instances, detailed descriptions of well known methods, interfaces, circuits, and devices are omitted so as not obscure the description with unnecessary detail. Moreover, individual blocks are shown in some of the drawings. It will be appreciated that the functions of those blocks may be implemented using individual hardware circuits, using software programs and data, in conjunction with a suitably programmed digital microprocessor or general purpose computer, using application specific integrated circuitry, and/or using one or more digital signal processors.

A high-level embodiment of the invention introduces a network based registration function that registers on behalf of the terminal through the CS access in the IMS network when really needed. This avoids the problem that the terminal will never be registered through CS access and also the problem of having multiple registrations for CS access and PS access which may interfere with each other. If the terminal is already registered in IMS through other means, e.g., through the PS access network, the network based registration function will not perform a registration of the terminal through CS access. If the terminal looses the IMS registration, but still is reachable through CS access, the network based registration function registers on behalf of the terminal.

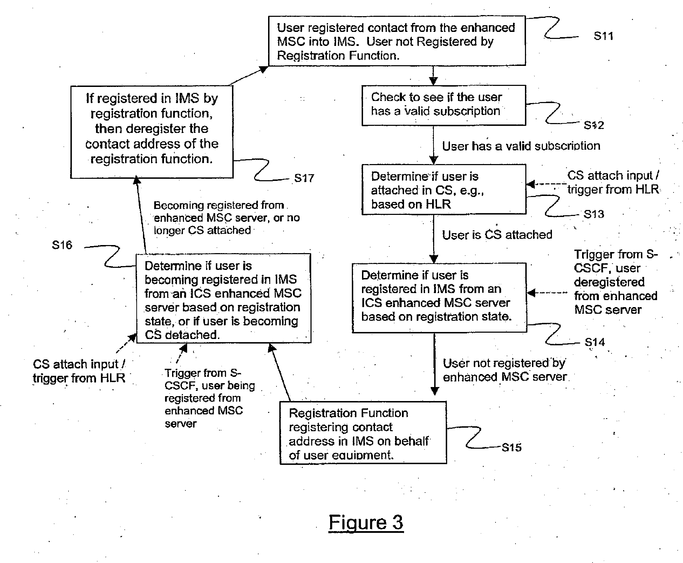

Figure 3 is a diagram illustrating the detailed logic of the network based registration function when the IMSC scenario is used. In Step S11, the terminal is not registered in IMS via the CS access by the network based registration function. At this point in time, the terminal may however be registered in IMS by the ICS enhanced visited MSC server. The registration function must evaluate whether it needs to register the user or not.

In Step S12, the subscriber data is checked to validate if the user can use the IMS centralized services. This check may, for example, compromise validating that the related user has a set of identities provisioned related to ICS. If not, no further processing is needed and the network based registration function will not register on behalf of the terminal. This step can be seen as optional in case it is by other means already known that the user is allowed to use IMS centralized services. If Step S12 succeeds and the user is allowed to use ICS services, it proceeds to Step S13.

In Step S13, the network based registration function verifies that the terminal is CS access attached. This can be done e.g., by contacting the Home Location Register (HLR). If the user is CS attached, it proceeds to Step S14.

In Step S14, the network based registration function verifies if the terminal is already registered in IMS through an ICS enhanced visited MSC server. This can be done in different ways. In one embodiment of the invention, this is done by collocating the network based registration function with the Gateway MSC server. If the visited MSC server is not ICS capable, the network based registration function by default assumes that the terminal is not registered through an ICS enhanced visited MSC. server. In another embodiment of the invention where the network based registration function is using the registration state in the IMS network, e.g., from the S-CSCF, the network based registration function can detect if the terminal has already been registered in IMS or not. It may even be possible to identify whether the registration has been performed by an ICS capable MSC server or by the UE provided that suitable information is included in the contact. If it is registered in IMS but not from the network based registration function, it can assume that it is registered from an ICS enhanced visited MSC server. This invention does not preclude other collocation options. If not registered in IMS from an ICS enhanced visited MSC server, Step S15 is performed.

In step S15, the network based registration function registers the terminal in IMS. When registering the terminal, the network based registration function will provide a contact address. As the terminal is not reachable through PS, it will not have a contact address. Instead, the network based registration function needs to insert a contact address to the entity where SIP messages should be sent. This could be a Gateway MSC, MGCF, and Application Server, or the address of the network element where the network based registration function resides.

In Step S16. the terminal is registered in IMS through the CS access via the network based registration function. At this point in time, the network based registration function needs to evaluate if the terminal needs to be deregistered for any reason. The terminal should become deregistered if either the terminal is no longer attached to CS (based on trigger input from HLR) or if the terminal becomes registered from an ICS enhanced visited MSC server (based on e.g., registration status information from the Serving-CSCF).

In Step S17, the network based registration function will ensure that the contact address registered by the network based registration function is deregistered. Hence, if it is still registered, it will deregister the contact information.

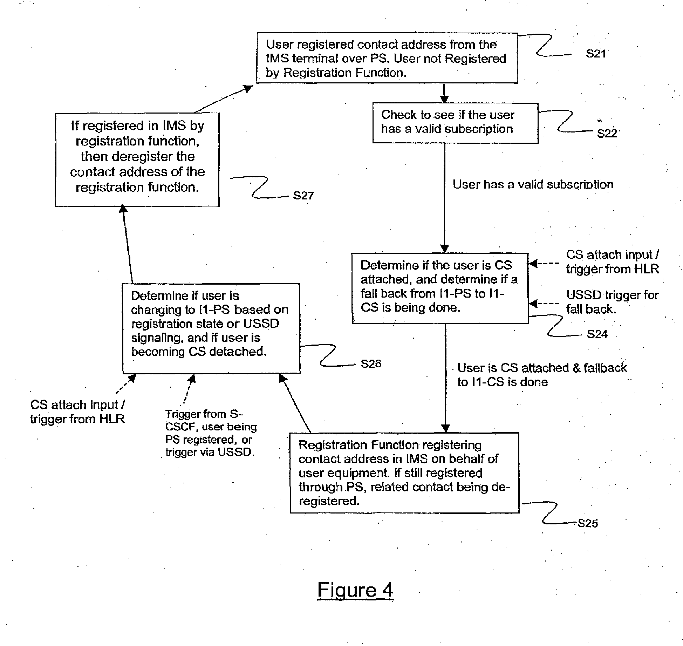

Figure 4 is a diagram illustrating the detailed logic of the network based registration function when the I1-PS and I1-CS scenario is used. In Step S21, the terminal is not registered in IMS via the CS access by the network based registration function. At this point in time, the terminal may however be registered in IMS over the PS access using I1-PS. The registration function must evaluate whether it needs to register the user or not.

In Step S22, the subscriber data is checked to validate if the user can use the IMS centralized services. This check may, for example, comprise validating that the related user has a set of identities provisioned related to ICS. If not, no further processing is needed and the network based registration function will not register on behalf of the terminal. This step can be seen as optional in case it is already known by other means that the user is allowed to use IMS centralized services. If Step S22 succeeds and the user is allowed to use ICS services, it proceeds to Step S24.

Step S24 will occur when a fall back from I1-PS to I1-CS is done and the terminal is still CS attached. This means that the PS access is lost and the control signalling must be sent over CS instead. When this is done, this is used as a trigger to the network based registration function to register the terminal. Note that at this point in time, the terminal may still be registered over the PS access, even though it has lost the connectivity and is switching to CS access only. Step S25 is performed.

In step S25 the network based registration function registers the terminal in IMS, When registering the terminal, the network based registration function will provide a contact address. As the terminal is not reachable through PS, it will not have a contact address. Instead, the network based registration function needs to insert a contact address to the entity where SIP messages should be sent. This could be a Gateway MSC, MGCF, and Application Server, or the address of the network element where the network based registration function resides. When performing the registration from the network based registration function, any remaining registration through the PS access will be automatically de-registered.

In Step S26, the terminal is registered in IMS through the CS access via the network based registration function. At this point in time, the network based registration function needs to evaluate if the terminal needs to be deregistered for any reason.

Step S26 is performed to decide when the network based registration function should go back into a de-registered state. The network based registration function needs to monitor to see when a handover is done from I1-CS to I1-PS. This can be done e.g., by monitoring the USSD signalling or receiving registration state from the IMS network such as the S-CSCF. It also needs to determine if the terminal is still available over CS access (e.g., based on the HLR state). If the user is changing to I1-PS and is still CS attached, it continues to Step S27.

In Step S27, the network based registration function will ensure that the user is not registered by the network based registration function anymore. Hence, if it is still registered, it will deregister the terminal. An explicit de-registration will not always be necessary when changing from 11-CS to I1-PS as the CS registration will automatically be deregistered when the terminal registers over the PS access, as only one registration is allowed at a point in time using the same private user identity. In case different private user identities are being used for registration from CS and PS, there may be a need to do an explicit deregistration.

The logic for the network based registration function for the IMSC and for the I1-PS / 11-CS scenarios can also be combined.

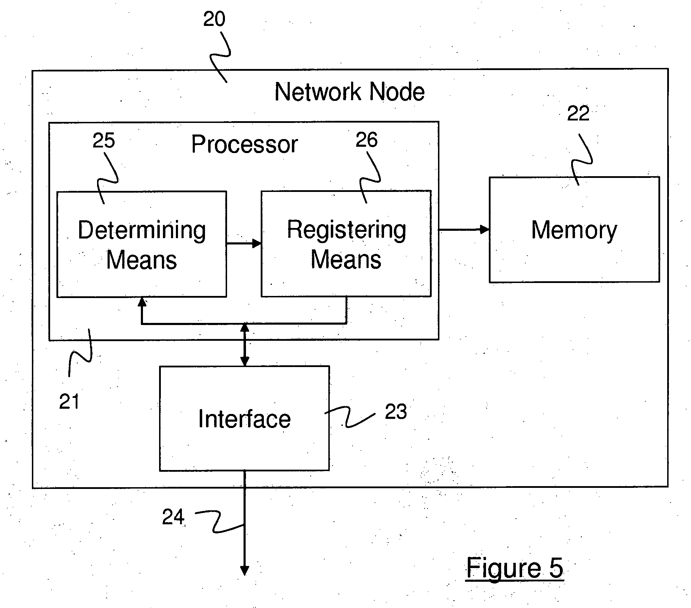

Figure 5 illustrates a network node 20 for performing at least some of the functionality described hereinbefore. The network node 20 may, for example, comprise a Gateway Mobile Switching Centre (MSC), an Application Server, a Media Gateway Control Function (MGCF) or any other suitable node of the communications network for performing the functions.

The network node 20 is embodied, in this example, as a processor 21, such as a microprocessor, associated with a memory 22 containing a program for controlling the processor 21 and providing temporary and permanent memory for data produced by the processor 21. The processor 21 is connected via an interface 23 to an input/output port 24, which provides communication with the rest of the communications network.

The processor 21 embodies determining means 25 and registering means 26. The means 25 and 26 are embodied as functions within the processor 25 in accordance with a program contained in the memory 22. Control and data flows are illustrated by arrow heads in the lines interconnecting the various means of the network node 20.

The determining means 25 determines whether a user terminal is reachable via a first contact address. When the determining means 25 determines that the user terminal is no longer reachable via this address, it signals the registering means 26. In response to this determination, the registering means 26 registers a second reachable contact address on behalf of the user terminal with the IP Multimedia Subsystem 3.

Embodiments of the invention can ensure that a user will always be registered in the IMS, which means that it can always receive registered services. Interaction problems between possible CS registration and PS registration can be avoided by ensuring that it will either be registered in CS or in PS, but never in both at the same time.

## Claims

1. A method of ensuring that a currently reachable contact address is registered for a user terminal (8) within an IP Multimedia Subsystem (3), the method comprising:
registering a first contact address for said terminal with the IP Multimedia Subsystem;
and **characterised by**
subsequently determining at a network based registration function that said terminal is no longer reachable via said first contact address; and
as a consequence of such a determination, the network based registration function registering a second reachable contact address on behalf of the user terminal, with the IP Multimedia Subsystem (3).

2. A method according to claim 1 and comprising determining at the network based registration function whether or not said user terminal (8) is associated with a user subscription allowing access to IP Multimedia Subsystem Centralized Services and performing said step of registering a second reachable contact address only if access is allowed

3. A method according to claim 1, wherein said first contact address is an address associated with a packet switched access and said second contact address is an address associated with a circuit switched access and wherein said step of subsequently determining that said terminal (8) is no longer reachable via said first contact address comprises determining that said packet switched access has been lost.

4. A method according to claim 3 and comprising, following registration of said second contact address, determining at the network based registration function that said terminal (8) is again reachable via said first contact address and, as a consequence, deregistering said second contact address and wherein reregistration of the first contact address is initiated by the user terminal over the packet switched access.

5. A method according to claim 1, wherein said steps of subsequently determining that said terminal (8) is no longer reachable via said first contact address and registering a second reachable contact address, are performed at a the network based registration function within a circuit switched core network.

6. A method according to claim 1 and comprising the network based registration function deregistering said first contact address with the IP Multimedia Subsystem (3) in the event that it is determined that said terminal (8) is no longer reachable via said first contact address.

7. A method according to claim 1 and comprising, as a consequence of a determination at the network based registration function that said terminal is no longer reachable via said first contact address, the network based registration function deregistering the first contact address with the IP Multimedia Subsystem.

8. A method according to claim 1 or 2, wherein said first contact address is associated with a Mobile Switching Centre of a circuit switched core network, the Mobile Switching Center providing a point of presence for the user terminal within the IP Multimedia Subsystem, and said second contact address is associated with an alternative Session Initiation Protocol message destination and wherein said step of registering a first contact address is performed by said Mobile Switching Center and wherein said alternative destination is one of a Gateway Mobile Switching Centre, a Media Gateway Control Function, and a Session Initiation Protocol Application Server.

9. A method according to claim 7 and comprising the network based registration function querying the IP Multimedia Subsystem to determine whether or not said first contact address is registered on behalf of the user terminal and, if not, performing said step of registering said second reachable contact address.

10. A method according to claim 9 and comprising, following registration of said second contact address by the network based registration function, the network based registration function querying the IP Multimedia Subsystem again to determine whether or not said first contact address has been reregistered and, if so, deregistering said second contact address.

11. A method according to claim 9 and comprising, following registration of said second contact address by the network based registration function, sending a notification from a Serving Control State Function to the network based registration function to inform the network based registration function when said first contact address has been reregistered, the network based registration function responding by deregistering said second contact address.

12. A method of ensuring that a currently reachable contact address is registered for a user terminal within an IP Multimedia Subsystem, where the user terminal may have available to it one or both of a packet switched and a circuit switched access, the method comprising:
when the user terminal has available to it both a packet switched and a circuit switched access, registering a first contact address associated with the packet switched access for said terminal with the IP Multimedia Subsystem; and **characterised by**
subsequently determining at a network based registration function that said terminal is no longer reachable via said packet switched access; and
as a consequence of such a determination, the network based registration function registering on the network side a second contact address associated with said circuit switched access on behalf of the user terminal, with the IP Multimedia Subsystem.

13. A method of ensuring that a currently reachable contact address is registered for a user terminal within an IP Multimedia Subsystem, the method comprising:
where the user terminal is being served by an enhanced Mobile Switching Centre, registering a first contact address for said terminal with the IP Multimedia Subsystem, the first contact address being associated with said enhanced Mobile Switching Centre; and **characterised by** subsequently determining at a network based registration function that said terminal is no longer reachable via said first contact address; and
as a consequence of such a determination, the network based registration function registering on the network side a second reachable contact address on behalf of the user terminal, with the IP Multimedia Subsystem, the second contact address being associated with an alternative Session Initiation Protocol message destination.

14. Apparatus configured to perform a network based registration function on behalf of user terminals, registering contact addresses for user terminals with an IP Multimedia Subsystem, and for use in implementing the method of any one of claims 1, 12, or 13.

15. A communications network node (20) for ensuring that a currently reachable contact address is registered for a user terminal within an IP Multimedia Subsystem, **characterised by**: means for determining (25) that said terminal is no longer reachable via a first contact address: and means responsive to such a determination for registering (26) a second reachable contact address on behalf of the user terminal with the IP Multimedia Subsystem (3).

16. A node as claimed in claim 15, comprising one of a Gateway Mobile Switching Centre, an Application Server, and a Media Gateway Control Function.

## Patentansprüche

1. Verfahren zum Sicherstellen, dass eine derzeit erreichbare Kontaktadresse für ein Benutzerendgerät (8) in einem IP Multimedia Subsystem bzw. IMS (3) registriert ist, wobei das Verfahren umfasst:
Registrieren einer ersten Kontaktadresse für das Endgerät an dem IMS,
**gekennzeichnet durch**:
folgendes Bestimmen, in einer Netzwerk-basierten Registrierungsfunktion, dass das Endgerät nicht mehr über die erste Kontaktadresse erreichbar ist,
wobei in Folge einer derartigen Bestimmung, die Netzwerk-basierte Registrierungsfunktion eine zweite erreichbare Kontaktadresse für das Benutzerendgerät an dem IMS (3) registriert.

2. Verfahren nach Anspruch 1, das weiterhin das Bestimmen, an der Netzwerk-basierten Registrierungsfunktion, ob das Benutzerendgerät (8) mit einer Benutzerteilnahme, die einen Zugriff auf IMS Centralized Services gestattet, assoziiert ist oder nicht, umfasst und den Schritt zum Registrieren einer zweiten erreichbaren Kontaktadresse nur dann durchführt, wenn der Zugriff gestattet wird.

3. Verfahren nach Anspruch 1, wobei die erste Kontaktadresse eine Adresse ist, die mit einem paketvermittelten Zugriff assoziiert ist, und die zweite Kontaktadresse eine Adresse ist, die mit einem leitungsvermittelten Zugriff assoziiert ist, und wobei der Schritt zum folgenden Bestimmen, dass das Endgerät (8) nicht mehr über die erste Kontaktadresse erreichbar ist, das Bestimmen, dass der paketvermittelte Zugriff verloren gegangen ist, umfasst.

4. Verfahren nach Anspruch 3, das weiterhin auf das Registrieren der zweiten Kontaktadresse folgend das Bestimmen, an der Netzwerk-basierten Registrierungsfunktion, dass das Endgerät (8) wieder über die erste Kontaktadresse erreichbar ist, und in Folge davon das Deregistrieren der zweiten Kontaktadresse umfasst, wobei die Deregistrierung der ersten Kontaktadresse durch das Benutzerendgerät über den paketvermittelten Zugriff eingeleitet wird.

5. Verfahren nach Anspruch 1, wobei die Schritte zum folgenden Bestimmen, dass das Endgerät (8) nicht mehr über die erste Kontaktadresse erreichbar ist, und zum Registrieren einer zweiten erreichbaren Kontaktadresse an der Netzwerk-basierten Registrierungsfunktion in einem leitungsvermittelten Kernnetzwerk durchgeführt werden.

6. Verfahren nach Anspruch 1, wobei die Netzwerk-basierte Registrierungsfunktion die erste Kontaktadresse an dem IMS (3) deregistriert, wenn bestimmt wird, dass das Endgerät (8) nicht mehr über die erste Kontaktadresse erreichbar ist.

7. Verfahren nach Anspruch 1, dass in Folge einer Bestimmung an der Netzwerk-basierten Registrierungsfunktion, dass das Endgerät nicht mehr über die erste Kontaktadresse erreichbar ist, die Netzwerk-basierte Registrierungsfunktion die erste Kontaktadresse an dem IMS deregistriert.

8. Verfahren nach Anspruch 1 oder 2, wobei die erste Kontaktadresse mit einem Mobile Switching Center bzw. MSC eines leitungsvermittelten Kernnetzwerks assoziiert ist, wobei das MSC einen Präsenzpunkt für das Benutzerendgerät in dem IMS vorsieht und die zweite Kontaktadresse mit einem alternativen Session Initiation Protocol bzw. SIP-Nachrichtenziel assoziiert ist, und wobei der Schritt zum Registrieren einer ersten Kontaktadresse durch das MSC durchgeführt wird und das alternative Ziel ein Gateway Mobile Switching Center, eine Media Gateway Control Function oder ein Session Initiation Protocol Application Server ist.

9. Verfahren nach Anspruch 7, wobei die Netzwerk-basierte Registrierungsfunktion an dem IMS anfragt, zu bestimmen, ob die erste Kontaktadresse für das Benutzerendgerät registriert ist oder nicht, und wenn dies nicht der Fall ist, den Schritt zum Registrieren der zweiten erreichbaren Kontaktadresse durchführt.

10. Verfahren nach Anspruch 9, wobei die Netzwerk-basierte Registrierungsfunktion auf das Registrieren der zweiten Kontaktadresse durch die Netzwerk-basierte Registrierungsfunktion folgend erneut an dem IMS anfragt, zu bestimmen, ob die erste Kontaktadresse registriert wurde oder nicht, und wenn dies der Fall ist, die zweite Kontaktadresse deregistriert.

11. Verfahren nach Anspruch 9, das auf die Registrierung der zweiten Kontaktadresse durch die Netzwerk-basierte Registrierungsfunktion folgend das Senden einer Benachrichtigung von einer Serving Control State Function an die Netzwerk-basierte Registrierungsfunktion umfasst, um die Netzwerk-basierte Registrierungsfunktion zu informieren, dass die erste Kontaktadresse registriert wurde, wobei die Netzwerk-basierte Registrierungsfunktion antwortet, indem sie die zweite Kontaktadresse deregistriert.

12. Verfahren zum Sicherstellen, dass eine derzeit erreichbare Kontaktadresse für ein Benutzerendgerät in einem IMS registriert ist, wobei ein paketvermittelter und/oder ein leitungsvermittelter Zugriff für das Benutzerendgerät verfügbar sein können, wobei das Verfahren umfasst:
wenn ein paketvermittelter und ein leitungsvermittelter Zugriff für das Benutzerendgerät verfügbar sind, Registrieren einer ersten Kontaktadresse, die mit dem paketvermittelten Zugriff für das Endgerät assoziiert ist, an dem IMS, **gekennzeichnet durch**:
folgendes Bestimmen, an einer Netzwerk-basierten Registrierungsfunktion, dass das Endgerät nicht mehr über den paketvermittelten Zugriff erreichbar ist,
wobei in Folge einer derartigen Bestimmung die Netzwerk-basierte Registrierungsfunktion auf der Netzwerkseite eine zweite Kontaktadresse, die mit dem leitungsvermittelten Zugriff für das Benutzerendgerät assoziiert ist, an dem IMS registriert.

13. Verfahren zum Sicherstellen, dass eine derzeit erreichbare Kontaktadresse für ein Benutzerendgerät in einem IMS registriert ist, wobei das Verfahren umfasst:
wenn das Benutzerendgerät durch ein erweitertes MSC (enhanced MSC bzw. eMSC) bedient wird, Registrieren einer ersten Kontaktadresse für das Endgerät an dem IMS, wobei die erste Kontaktadresse mit dem eMSC assoziiert ist, **gekennzeichnet durch**:
folgendes Bestimmen, an einer Netzwerk-basierten Registrierungsfunktion, dass das Endgerät nicht mehr über die erste Kontaktadresse erreichbar ist,
wobei in Folge einer derartigen Bestimmung die Netzwerk-basierte Registrierungsfunktion auf der Netzwerkseite eine zweite erreichbare Kontaktadresse für das Benutzerendgerät an dem IMS registriert, wobei die zweite Kontaktadresse mit einem alternativen SIP-Nachrichtenziel assoziiert ist.

14. Vorrichtung, konfiguriert zum Durchführen einer Netzwerk-basierten Registrierungsfunktion für Benutzerendgeräte, zum Registrieren von Kontaktadressen für Benutzerendgeräte an einem IMS und für die Verwendung beim Implementieren des Verfahrens nach einem der Ansprüche 1, 12 oder 13.

15. Kommunikationsnetzwerkknoten (20) zum Sicherstellen, dass eine derzeit erreichbare Kontaktadresse für ein Benutzerendgerät in einem IMS registriert ist, **gekennzeichnet durch**: Einrichtungen zum Bestimmen (25), dass das Endgerät nicht mehr über eine erste Kontaktadresse erreichbar ist, und Einrichtungen, die auf eine derartige Bestimmung antworten, indem sie eine zweite erreichbare Kontaktadresse für das Benutzerendgerät an dem IMS (3) registrieren (26).

16. Knoten nach Anspruch 15, der ein Gateway Mobile Switching Centre, einen Application Server oder eine Media Gateway Control Function umfasst.

## Revendications

1. Procédé permettant de garantir qu'une adresse de contact pouvant actuellement être atteinte est enregistrée pour un terminal d'utilisateur (8) dans un sous-système multimédia IP (3), le procédé comprenant :
l'enregistrement d'une première adresse de contact pour ledit terminal avec le sous-système multimédia IP ;
et **caractérisé par**
la détermination ultérieure au niveau d'une fonction d'enregistrement basée sur un réseau du fait que ledit terminal ne peut plus être atteint par l'intermédiaire de ladite première adresse de contact ; et
en conséquence de cette détermination, l'enregistrement par ladite fonction d'enregistrement basée sur un réseau d'une seconde adresse de contact pouvant être atteinte pour le compte du terminal d'utilisateur, avec le sous-système multimédia IP (3).

2. Procédé selon la revendication 1 et comprenant la détermination au niveau de la fonction d'enregistrement basée sur un réseau du fait que ledit terminal d'utilisateur (8) est ou non associé avec un abonnement d'utilisateur donnant accès à des services centralisés du sous-système multimédia IP et l'exécution de ladite étape d'enregistrement d'une seconde adresse de contact ne pouvant être atteinte que si l'accès est autorisé.

3. Procédé selon la revendication 1, dans lequel ladite première adresse de contact est une adresse associée avec un accès à commutation de paquets et ladite seconde adresse de contact et une adresse associée avec un accès à commutation de circuits et dans lequel ladite étape de détermination ultérieure du fait que ledit terminal (8) ne peut plus être atteint par l'intermédiaire de ladite première adresse de contact comprend la détermination du fait que ledit accès à commutation de paquets a été perdu.

4. Procédé selon la revendication 3 et comprenant, à la suite de l'enregistrement de ladite seconde adresse de contact, la détermination au niveau de la fonction d'enregistrement basée sur un réseau du fait que ledit terminal (8) peut à nouveau être atteint par l'intermédiaire de ladite première adresse de contact et, en conséquence, la résiliation de ladite seconde adresse de contact et dans lequel l'enregistrement de la première adresse de contact est initialisé par le terminal d'utilisateur sur l'accès à commutation de paquets.

5. Procédé selon la revendication 1, dans lequel lesdites étapes de détermination ultérieure du fait que ledit terminal (8) ne peut plus être atteint par l'intermédiaire de ladite première adresse de contact et d'enregistrement d'une seconde adresse de contact pouvant être atteinte, sont exécutées au niveau de la fonction d'enregistrement basée sur un réseau dans un réseau central à commutation de circuits.

6. Procédé selon la revendication 1 et comprenant la résiliation de la fonction d'enregistrement basée sur un réseau de ladite première adresse de contact avec le sous-système multimédia IP (3) dans le cas où l'on a déterminé que ledit terminal (8) ne peut plus être atteint par l'intermédiaire de ladite première adresse de contact.

7. Procédé selon la revendication 1 et comprenant, en conséquence de la détermination au niveau de la fonction d'enregistrement basée sur un réseau du fait que ledit terminal ne peut plus être atteint par l'intermédiaire de ladite première adresse de contact, la résiliation de la fonction d'enregistrement basée sur un réseau de la première adresse de contact avec le sous-système multimédia IP.

8. Procédé selon la revendication 1 ou 2, dans lequel ladite première adresse de contact est associée avec un centre de commutation mobile d'un réseau central commuté par circuits, le centre de commutation mobile fournissant un point de présence pour le terminal d'utilisateur dans le sous-système multimédia IP, et ladite seconde adresse de contact est associée avec une autre destination de message de protocole d'initialisation de session et dans lequel ladite étape d'enregistrement d'une première adresse de contact est exécutée par ledit centre de commutation mobile et dans lequel ladite autre destination est un centre de commutation mobile de passerelle ou une fonction de commande de passerelle de média ou un serveur d'application de protocole d'initialisation de session.

9. Procédé selon la revendication 7 et comprenant la fonction d'enregistrement basée sur un réseau interrogeant le sous-système multimédia IP pour déterminer si ladite première adresse de contact est ou non enregistrée pour le compte du terminal d'utilisateur et dans la négative, l'exécution de ladite étape d'enregistrement de ladite seconde adresse de contact pouvant être atteinte.

10. Procédé selon la revendication 9 et comprenant, à la suite de l'enregistrement de ladite seconde adresse de contact par la fonction d'enregistrement basée sur un réseau, la fonction d'enregistrement basée sur un réseau interrogeant à nouveau le sous-système multimédia IP pour déterminer si ladite première adresse de contact a ou non été enregistrée et dans l'affirmative, la résiliation de ladite seconde adresse de contact.

11. Procédé selon la revendication 9 et comprenant, à la suite de l'enregistrement de ladite seconde adresse de contact par la fonction d'enregistrement basée sur un réseau, l'envoi d'une notification depuis une fonction d'état de commande de serveur à la fonction d'enregistrement basée sur un réseau pour informer la fonction d'enregistrement basée sur un réseau que ladite première adresse de contact a été enregistrée, la fonction d'enregistrement basée sur un réseau répondant en résiliant ladite seconde adresse de contact.

12. Procédé permettant de garantir qu'une adresse de contact pouvant actuellement être atteinte est enregistrée pour un terminal d'utilisateur dans un sous-système multimédia IP, dans lequel on peut rendre disponible au terminal d'utilisateur un ou les deux d'un accès à commutation de paquets et d'un accès à commutation de circuits, le procédé comprenant :
lorsqu'on rend disponible au terminal d'utilisateur à la fois un accès à commutation de paquets et un accès à commutation de circuits, l'enregistrement d'une première adresse de contact associée avec l'accès à commutation de paquets pour ledit terminal avec le sous-système multimédia IP ; et **caractérisé par**
la détermination ultérieure au niveau d'une fonction d'enregistrement basée sur un réseau du fait que ledit terminal ne peut plus être atteint par l'intermédiaire dudit accès à commutation de paquets ; et
en conséquence de cette détermination, l'enregistrement par la fonction d'enregistrement basée sur un réseau du côté réseau d'une seconde adresse de contact associée avec ledit accès à commutation de circuits pour le compte du terminal d'utilisateur, avec le sous-système multimédia IP (3).

13. Procédé permettant de garantir qu'une adresse de contact pouvant actuellement être atteinte est enregistrée pour un terminal d'utilisateur dans un sous-système multimédia IP, le procédé comprenant :
lorsque le terminal d'utilisateur est desservi par un centre de commutation mobile évolué, l'enregistrement d'une première adresse de contact pour ledit terminal avec le sous-système multimédia IP, la première adresse de contact étant associée avec ledit centre de commutation mobile évolué ; et **caractérisé par**
la détermination ultérieure au niveau d'une fonction d'enregistrement basée sur un réseau du fait que ledit terminal ne peut plus être atteint par l'intermédiaire de ladite première adresse de contact ; et
en conséquence de cette détermination, l'enregistrement par la fonction d'enregistrement basée sur un réseau, du côté réseau, d'une seconde adresse de contact pouvant être atteinte pour le compte du terminal d'utilisateur, avec le sous-système multimédia IP, la seconde adresse de contact étant associée à une autre destination de message de protocole d'initialisation de session.

14. Dispositif configuré pour exécuter une fonction d'enregistrement basée sur un réseau pour le compte de terminaux d'utilisateur, enregistrer des adresses de contact pour les terminaux d'utilisateur avec un sous-système multimédia IP et destiné à être utilisé pour la mise en oeuvre du procédé selon l'une quelconque des revendications 1, 12 ou 13.

15. Noeud de réseau de communication (20) pour garantir qu'une adresse de contact pouvant actuellement être atteinte est enregistrée pour un terminal d'utilisateur dans un sous-système multimédia IP **caractérisé par** : un moyen pour déterminer (25) que ledit terminal ne peut plus être atteint par l'intermédiaire d'une première adresse de contact ; et un moyen réagissant à cette détermination pour enregistrer (26) une seconde adresse de contact pouvant être atteinte pour le compte du terminal d'utilisateur avec le sous-système multimédia IP (3).

16. Noeud selon la revendication 15, comprenant un parmi un centre de commutation mobile de passerelle, un serveur d'application et une fonction de commande de passerelle de média.
